# EUROPÄISCHE PATENTSCHRIFT

(11) **EP 1 855 056 B1**
(45) Veröffentlichungstag und Bekanntmachung des Hinweises auf die Patenterteilung: **01.05.2013**
(21) Anmeldenummer: 07009306.7
(22) Anmeldetag: 09.05.2007
(51) Int. Cl.: F23J 15/02, B01D 45/04

(54) **Rauchgaskanal mit einem Grobascheabscheider**
Flue duct with a coarse ash separator
Conduit de de gaz de combustion avec séparateur de cendres grossières

(30) Priorität: 10.05.2006 DE 102006021670
(43) Veröffentlichungstag der Anmeldung: 14.11.2007
(73) Patentinhaber: Doosan Lentjes GmbH, 40880 Ratingen (DE)
(72) Erfinder: Feldhoff, Ralf, 41564 Kaarst (DE)
(74) Vertreter: Becker, Thomas

(56) Entgegenhaltungen:
- WO-A1-2004/001290
- WO-A2-00/64561
- DE-A1- 2 315 663
- DE-A1- 4 112 452
- DE-A1- 4 112 454
- FR-A- 1 387 107
- GB-A- 225 638
- US-A- 2 723 725
- US-A- 3 066 464
- US-A- 5 738 711

## Beschreibung

Die vorliegende Erfindung betrifft einen Rauchgaskanal eines Kraftwerks, wie beispielsweise ein Kohlekraftwerk, eine Müllverbrennungsanlage oder dergleichen mit einem darin eingebauten oder an diesem angeordneten grobascheabscheider.

Bei dem Verbrennungsprozeß in einem Kraftwerk der oben genannten Art werden Aschepartikel erzeugt, die teilweise direkt über einen Aschetrichter aus dem Verbrennungsraum abgezogen und teilweise von dem aus der Verbrennung resultierenden Abgas- bzw. Rauchgasstrom mitgerissen werden. Die von der Strömung mitgerissenen großvolumigen Aschepartikel, die auch als Large Particle Ash (LPA) oder als Popcorn Ash bezeichnet werden, können zu einer Verstopfung von nachfolgend angeordneten Anlagekomponenten, wie beispielsweise Katalysatoren, regenerativ arbeitende Luftvorwärmer oder dergleichen führen, wodurch die Funktion der entsprechenden Komponenten beeinträchtigt und unerwünschte Druckverluste erzeugt werden können. Die betroffenen Komponenten müssen dann entsprechend gereinigt oder ersetzt werden, um den ordnungsgemäßen Betrieb des Kraftwerks wiederherzustellen. Dies ist sowohl zeit- als auch kosteninten-siv. Im ungünstigsten Fall müssen die Feuerungsanlagen des Kraftwerks zum Reinigen oder Austausch der verstopften Anlagenkomponenten sogar vollständig abgefahren werden, was zu erheblichen wirtschaftlichen Einbußen führt.

Um den Eintrag großvolumiger Aschepartikel in zu Verstopfungen neigende Anlagenteile zu verhindern, ist es bekannt, sogenannte Grobascheabscheider in den Rauchgaskanälen von Kraftwerken vorzusehen, welche die großvolumigen Aschepartikel abscheiden, bevor diese zu den entsprechenden Anlageteilen gelangen können. Derartige Grobascheabscheider können beispielsweise als Gitter, Netze oder als sonstige strömungstechnische Einbauten ausgebildet sein, die dazu geeignet sind, Aschepartikel aus dem Rauchgasstrom zu entfernen. Die mit Hilfe des Grobascheabscheiders abgeschiedenen großvolumigen Aschepartikel werden schließlich über eine geeignete Austrageinrichtung, wie beispielsweise einen Aschetrichter oder dergleichen entfernt.

Ein Rauchgaskanal mit einem darin eingebauten Grobascheabscheider der genannten Art ist beispielsweise in der WO-A-2004/001290 beschrieben. Der Grobascheabscheider ist stromauf eines Katalysators in einem Abschnitt eines Rauchgaskanals angeordnet und umfaßt ein Sieb, das sich im wesentlichen über den gesamten Querschnitt des Rauchgaskanals erstreckt, wobei das Sieb senkrecht zur Erstreckungsrichtung des Rauchgaskanals oder auch geneigt dazu angeordnet sein kann. Das Sieb umfaßt im wesentlichen parallel zueinander verlaufende, stromaufwärts gerichtete, faltenartig angeordnete Flächenabschnitte, die eine Vergrößerung der Siebfläche bewirken, wodurch die Abscheideleistung des Grobascheabscheiders verbessert wird.

Es ist eine **Aufgabe** der vorliegenden Erfindung, einen Rauchgaskanal mit einem darin eingebauten Grobascheabscheider der genannten Art weiter zu verbessern. Diese Aufgabe wird gemäß der vorliegenden Erfindung durch eine Vorrichtung nach Anspruch 1 **gelöst**. Die abhängigen Ansprüche beziehen sich auf individuelle Ausgestaltungen der vorliegenden Erfindung.

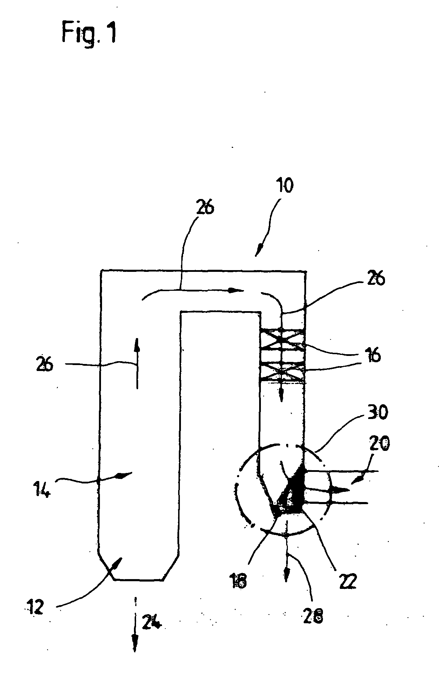

Der Grobascheabscheider zum Einbau in einen oder zum Anordnen an einem Rauchgaskanal gemäß der vorliegenden Erfindung umfaßt eine Siebanordnung mit einem ersten Siebabschnitt, der sich im bestimmungsgemäß eingebauten Zustand im wesentlichen quer zur Erstreckungsrichtung des abströmseitigen Rauchgaskanals erstreckt. Erfindungsgemäß umfaßt die Siebanordnung ferner einen sich im bestimmungsgemäß eingebauten Zustand oberhalb an den ersten Siebabschnitt anschließenden zweiten Siebabschnitt, der zum ersten Siebabschnitt geneigt ist. Diese mehrgeteilte und geneigt zueinander positionierte Siebanordnung trägt den im Bereich des Grobascheabscheiders vorherrschenden Strömungsverhältnissen Rechnung, was unter Bezugnahme auf Fig. 1 noch genauer beschrieben ist, wodurch die Abscheidung der Aschepartikel optimiert wird. Es wurde festgestellt, daß die großvolumigen Aschepartikel im wesentlichen auf zwei Wegen in den Rauchgaskanal gelangen können, nämlich zum einen durch direkten Strömungsmitriß und zum anderen durch Mitriß aus dem anströmseitig des Grobascheabscheiders vorgesehenen Aschetrichter. Dem direkten Strömungsmitriß wird im wesentlichen durch den zweiten Siebabschnitt der Siebanordnung begegnet. Die Aschepartikel prallen auf dem zweiten Siebabschnitt auf und werden von dort aus den geneigten Siebabschnitt hinabgleitend weiter in den Aschetrichter gefördert. Der erste Siebabschnitt der Siebanordnung verhindert hingegen im wesentlichen den massenmäßig dominierenden Partikeleintrag in den Rauchgaskanal durch Mitriß aus dem Aschetrichter.

Der Neigungswinkel zwischen dem ersten und dem zweiten Siebabschnitt ist bevorzugt ≤ 40°, besser noch ≤ 30°, wodurch die Entstehung von Ablagerungen auf dem zweiten Siebabschnitt und somit ein Zusetzen des Grobascheabscheiders sicher verhindert wird.

Die Siebanordnung weist bevorzugt zumindest ein Spaltsieb auf, dessen Siebwirkung durch zahlreiche parallel zueinander angeordnete Stäbe realisiert wird. Die Ausrichtung der Stäbe gibt dabei die Richtung vor, in der auf das Spaltsieb aufprallende Aschepartikel abgleiten sollen. Der Abstand zwischen den einzelnen Stäben ist den mit Hilfe des Grobascheabscheiders abzuscheidenden Aschepartikelgrößen entsprechend bemessen. Sollen beispielsweise Aschepartikel mit einer Partikelgröße von 6,5 mm abgeschieden werden, so ist der Abstand zwischen den einzelnen Stäben des Spaltsiebs entsprechend kleiner zu wählen, zum Beispiel 6 mm.

Der erste Siebabschnitt weist mehrere gasdurchlässige, winkelig zueinander stehende, faltenartige Flächenabschnitte auf, wobei zwischen den faltenartigen Flächenabschnitten Zwickelräume gebildet sind, die abwechselnd auf einer Anströmseite und einer Abströmseite der Siebanordnung liegen. Die auf diese Weise erzeugte Faltenstruktur des ersten Siebabschnitts erzeugt eine große Anströmfläche, wodurch die Abscheideleistung verbessert wird. Gleichzeitig befinden sich die Flächenabschnitte des ersten Siebabschnitts weitgehend in einem Umfeld mit niedrigen Strömungsgeschwindigkeiten, was sich ebenfalls positiv auf das Abscheideverhalten des Grobascheabscheiders auswirkt. Geringe Rauchgasgeschwindigkeiten im Bereich des Siebes können sich insbesondere auch auf die Standzeiten auswirken, da die Erosion deutlich reduziert ist.

Der zweite Siebabschnitt schließt bevorzugt im wesentlichen bündig an die Oberkanten der faltenartigen Flächenabschnitte an, wobei der zweite Siebabschnitt zuströmseitig bevorzugt über die faltenartigen Flächenabschnitte vorspringt und diese teilweise abdeckt. Auf diese Weise wird eine ordnungsgemäße Funktionsweise des erfindungsgemäßen Grobascheabscheiders gewährleistet.

Die faltenartigen Flächenabschnitte sind an ihren anströmseitigen hinteren Umlenkstellen vorteilhaft jeweils über eine geschlossene Rinne miteinander verbunden, wobei die geschlossenen Rinnen als Auffangrinnen für die abgeschiedenen Aschepartikel dienen. Durch die Neigung der faltenartigen Flächenabschnitte werden die Aschepartikel von der Strömung in die nicht durchströmten geschlossenen Rinnen am Ende jedes Zwickelraums getragen. Durch die hier fehlenden Strömungskräfte werden diese dann der Schwerkraft folgend über die Rinnen in den anströmseitig des Grobascheabscheiders angeordneten Aschetrichter geleitet. Sind die faltenartigen Flächenabschnitte als Spaltsiebe ausgebildet, so sind die Stäbe der Spaltsiebe bevorzugt in Richtung der geschlossenen Rinnen ausgerichtet, wodurch der Austrageffekt über die geschlossenen Rinnen verstärkt wird.

Der erste und/oder der zweite Siebabschnitt besteht bevorzugt aus perforierten Blechen. Alternativ können die Stäbe der Spaltsiebe natürlich auch geschweißt oder auf andere Art und Weise erzeugt werden.

Schließlich umfaßt der Grobascheabscheider bevorzugt eine Rüttel- oder Klopfeinrichtung, die den Grobascheabscheider bzw. die Siebanordnung im bestimmungsgemäß eingebauten Zustand bewegt. Die Bewegungen der Siebanordnung führen dazu, daß an der Siebfläche anhaftende Aschepartikel abgeschüttelt werden. Die Rütteleinrichtung kann beispielsweise in Form einer Vibrationseinrichtung vorgesehen sein, welche die Siebanordnung mit einer geeigneten Frequenz vibrieren läßt. Auch kann die Siebanordnung bzw. der gesamte Grobascheabscheider im bestimmungsgemäß angeordneten Zustand derart schwenkbar gehalten sein, daß die Siebanordnung unter Einfluß der Strömungskräfte gegen einen Anschlag oder dergleichen bewegt wird, wodurch an der Siebanordnung anhaftende Aschepartikel abgeklopft werden. Gegebenenfalls können auch Rückstellmittel in Form von Federn oder dergleichen vorgesehen sein, um eine hin und her schwenkende Bewegung zu realisieren. Bevorzugt erfolgt die Abreinigung jedoch durch die Klopfeinrichtung.

Nachfolgend wird eine bevorzugte Ausführungsform des Rauchgaskanals mit einem Grobascheabscheider unter Bezugnahme auf die beiliegende Zeichnung genauer beschrieben. Daran ist:
- Fig. 1: eine schematische Teilansicht eines Kraftwerks mit einem Grobascheabscheider gemäß einer Ausführungsform der vorliegenden Erfindung;
- Fig. 2: eine vergrößerte Ansicht des Grobascheabscheiders gemäß Fig. 1, welche die Gasströmung und den Aschepartikelstrom im Bereich des Ascheabscheiders schematisch darstellt;
- Fig. 3: eine perspektivische Ansicht des Grobascheabscheiders und
- Fig. 4: eine Seitenansicht des Grobascheabscheiders.

Fig. 1 zeigt schematisch einen Kraftwerksabschnitt mit einem Kessel 10, der eine einen Aschetrichter 12 aufweisende Brennkammer 14 sowie mehrere Wärmetauscher 16 umfaßt. Stromabwärts der Wärmetauscher ist ein weiterer Aschetrichter 18 vorgesehen, an den sich in Strömungsrichtung ein Rauchgaskanal 20 anschließt, der zu einem nicht dargestellten Entstickungs-Katataysator führt. Im Übergangsbereich zwischen dem Aschetrichter 18 und dem erfindungsgemäßen Rauchgaskanal 20 ist ein Grobascheabscheider 22 vorgesehen.

Während des Betriebs des Kraftwerks werden bei der Verbrennung in der Brennkammer 14 Aschepartikel erzeugt, die zum Großteil unmittelbar über den Aschetrichter 12 abgezogen werden, was in Fig. 1 durch den Pfeil 24 schematisch angedeutet ist. Ein Teil der Aschepartikel wird jedoch von dem durch die Verbrennung erzeugten Rauchgasstrom in Richtung der Pfeile 26 zum Rauchgaskanal 20 mitgerissen. Um zu verhindern, daß großvolumige Aschepartikel über den Rauchgaskanal 20 zum Entstickungs-Katalysator gelangen und diesen verstopfen, werden diese großvolumigen Aschepartikel mit Hilfe des Grobascheabscheiders 22 abgeschieden, im Aschetrichter 18 gesammelt und anschließend abgeführt, was in Fig. 1 durch den Pfeil 28 schematisch angedeutet ist. Weisen die Katalysatorkanäle des Entstickungs-Katalysators beispielsweise einen freien Durchmesser von 6,5 mm auf, so werden mittels des Grobascheabscheiders 22 sämtliche Partikel abgeschieden, deren maximale Abmessung 6 mm übersteigt, wodurch die Funktionsweise des Entstickungs-Katalysators sichergestellt wird.

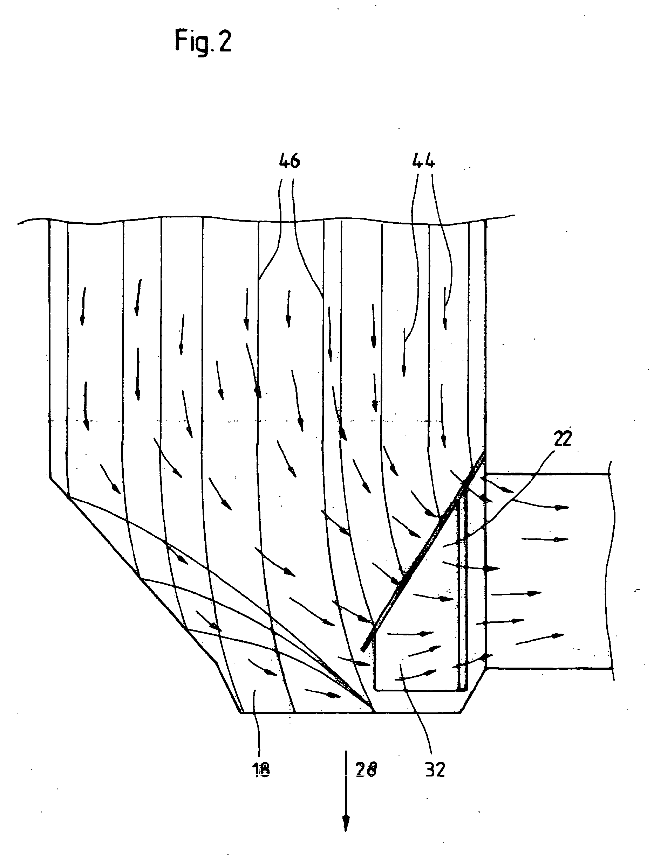

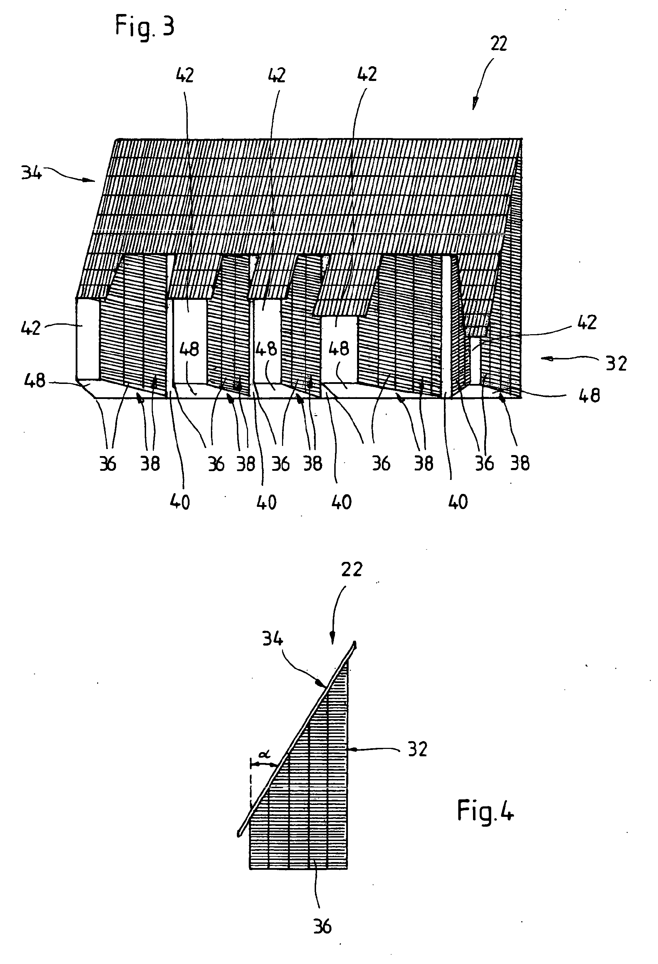

Eine vergrößerte Ansicht des in Fig. 1 mit dem Kreis 30 gekennzeichneten Bereichs ist in Fig. 2 dargestellt. Eine perspektivische Ansicht des Grobascheabscheiders 22 ist in Fig. 3 und eine Seitenansicht des Grobascheabscheiders 22 in Fig. 4 dargestellt. Der Grobascheabscheider 22 umfaßt eine Siebanordnung mit einem ersten Siebabschnitt 32 und einem zweiten Siebabschnitt 34. Der erste Siebabschnitt 32 umfaßt mehrere winklig zueinander angeordnete, sich im wesentlichen senkrecht und bei der vorliegenden Ausführungsform entsprechend quer zur Erstreckungsrichtung des Rauchgaskanals 20 erstreckende Flächenabschnitte 36, zwischen denen Zwickelräume 38 gebildet sind, die abwechselnd auf einer Anströmseite und einer Abströmseite des Grobascheabscheiders 22 liegen. Zur Bildung der anströmseitigen Zwickelräume 38 sind die entsprechenden Flächenabschnitte 36 über geschlossene Rinnen 40 miteinander verbunden, wobei die Rinnenöffnung in Richtung der Anströmseite des Grobascheabscheiders 22 weist. Zur Bildung der abströmseitigen Zwickelräume 38 hingegen sind die entsprechenden Flächenabschnitte 36 über plattenartige Stirnelemente 42 miteinander verbunden. Die Stirnelemente können sowohl als Siebe als auch als geschlossene Bleche oder Platten ausgebildet sein. Die Flächenabschnitte 36 sind vorliegend als Spaltsiebe ausgebildet, die jeweils eine Vielzahl von parallel angeordneten Stäben umfassen. Die einzelnen Stäbe sind in Richtung der Rinnen 40, vorliegend also horizontal ausgerichtet, um ein Abgleiten von Aschepartikeln in Richtung der Rinnen 40 zu begünstigen, was nachfolgend noch näher erläutert ist. Der zweite Siebabschnitt 34 schließt sich im bestimmungsgemäß eingebauten Zustand des Grobascheabscheiders 22 oberhalb an den ersten Siebabschnitt 32 an und ist in Bezug auf den ersten Siebabschnitt 32 in Abströmrichtung um einen Winkel α geneigt, wobei der Winkel α ≤ 40°, besser noch ≤ 30° ist. Der zweite Siebabschnitt 34 springt über die Flächenabschnitte 36 sowie über die Stirnelemente 42 vor, wodurch eine Abdeckung erzeugt wird, welche die anströmseitigen Zwickelräume 38 sowie die abströmseitigen Zwickelräume zumindest teilweise abdeckt. Auch der zweite Siebabschnitt 34 ist als Spaltsieb ausgebildet, wobei die das Spaltsieb bildenden Stäbe parallel zueinander angeordnet sind und sich im wesentlichen von unten aufwärts erstrecken. Durch diese Ausrichtung der Stäbe werden auf den zweiten Siebabschnitt 34 aufprallende Aschepartikel automatisch in Richtung des Aschetrichters 18 gefördert, was nachfolgend noch näher erläutert ist.

Fig. 2 zeigt schematisch die Gasströmung und die Aschepartikelbahnen im Bereich des bestimmungsgemäß eingebauten Grobascheabscheiders 22, wobei die Pfeile 44 die Gasströmung und die durchgezogenen Linien 46 die Aschepartikelbahnen repräsentieren. Die Gasströmung steht auf nahezu sämtlichen Bereichen des zweiten Siebabschnitts 34 im wesentlichen senkrecht, ausgenommen im obersten Teil, wo der Strömungsvektor auch eine Hangabtriebskomponente aufweist. Die Aschepartikel andererseits treffen durch ihre nahezu senkrechte Bewegungsrichtung im deutlichen Winkel auf den zweiten Siebabschnitt 34 und werden von hier abprallend in den Aschetrichter 18 gefördert, was durch die Ausrichtung der die Stegsiebplatte des zweiten Siebabschnitts 34 bildenden Stäbe begünstigt wird. Der zweite Siebabschnitt 34 dient somit im wesentlichen der Abscheidung von mit der Strömung mitgerissenen Partikeln.

Der faltenartig aufgebaute, sich im wesentlichen senkrecht erstreckende erste Siebabschnitt 32 dient hingegen im wesentlichen der Abscheidung von Aschepartikeln, die über den Aschetrichter 18 in Richtung des Rauchgaskanals 20 eingetragen werden. Die Aschepartikel prallen auf die Flächenabschnitte 36 der anströmseitigen Zwickelräume 38 und werden von dort aus mit der Strömung aufgrund der Neigung der Flächenabschnitte 36 und der Ausrichtung der die Stegsiebplatten der Flächenabschnitte 36 bildenden Stäbe in die Rinnen 40 gefördert, die am Ende jedes anströmseitigen Zwickelraums 38 vorgesehen sind. Durch die in den Rinnen 40 fehlenden Strömungskräfte werden die Aschepartikel dann der Schwerkraft foigend zurück in den Aschetrichter 18 geleitet. Die Bodenplatten 48 des Grobascheabscheiders 22 sind bevorzugt geschlossen ausgebildet, so daß durch diese keine Aschepartikel in den Rauchgaskanal 22 gelangen können.

An dieser Stelle sei angemerkt, daß die Ausrichtung des ersten Siebabschnitts 32 entsprechend der Ausrichtung des Rauchgaskanals 20 gewählt wird, nämlich im wesentlichen quer zu dieser. Im vorliegenden Fall ist die Ausrichtung des Rauchgaskanals 20 horizontal, weshalb sich die Flächenabschnitte 36 des ersten Siebabschnittes 32 im wesentlichen vertikal aufwärts erstrecken. Wird der Rauchgaskanal 20 hingegen in einem Winkel zur Horizontalen vorgesehen, so ändert sich bevorzugt die Erstreckungsrichtung der Flächenabschnitte 36 des ersten Siebabschnitts 32 entsprechend.

Der Grobascheabscheider 22 verfügt vorteilhaft über eine nicht dargestellte Rüttel-oder Klopfeinrichtung, über die der Grobascheabscheider 22 bewegt wird, um Aschepartikel zu lösen, die an den Siebabschnitten 32 und 34 hängen geblieben sind. Die Rütteleinrichtung kann beispielsweise über eine Vibrationseinrichtung realisiert werden, welche den Grobascheabscheider 22 in Schwingungen vorbestimmter Frequenz versetzt. Alternativ kann eine Klopfeinrichtung auf rein mechanischem Wege mit Hilfe einer schwenkbaren Aufhängung des Grobascheabscheiders 22, gegebenenfalls von entsprechenden Rückstellmitteln in Form von Federn oder dergleichen und eines Anschlags oder ähnlichem realisiert werden, wobei der Grobascheabscheider 22 durch die vorherrschende Strömung bewegt und gegen den Anschlag geklopft wird.

Es sollte klar sein, daß die zuvor beschriebene Ausführungsform des Grobascheabscheiders 22 nicht einschränkend ist. Vielmehr sind Modifikationen und Änderungen möglich, ohne den Schutzbereich der vorliegenden Erfindung zu verlassen, der durch die beiliegenden Ansprüche definiert ist. So müssen beispielsweise die Bodenplatten 48 nicht geschlossen sein. Eine Ausbildung als Sieb ist ebenfalls denkbar.

### Bezugszeichenliste

| | |
|---|---|
| 10 | Kessel |
| 12 | Aschetrichter |
| 14 | Brennkammer |
| 16 | Wärmetauscher |
| 18 | Aschetrichter |
| 20 | Rauchgaskanal |
| 22 | Grobascheabscheider |
| 24 | Pfeil |
| 26 | Pfeile |
| 28 | Pfeil |
| 30 | Kreis |
| 32 | erster Siebabschnitt |
| 34 | zweiter Siebabschnitt |
| 36 | Flächenabschnitte |
| 38 | Zwickelräume |
| 40 | Rinnen |
| 42 | Stirnelemente |
| 44 | Pfeile |
| 46 | Linien |
| 48 | Bodenplatten |
| 50 | α |

## Patentansprüche

1. Rauchgaskanal (20) mit einem darin eingebauten oder an diesem angeordneten Grobascheabscheider (22), der eine Siebanordnung umfasst mit einem ersten Siebabschnitt (32), der sich im bestimmungsgemäß eingebauten Zustand im Wesentlichen quer zur Erstreckungsrichtung des abströmseitigen Rauchgaskanals (20) erstreckt, wobei der erste Siebabschnitt (32) mehere gasdurchlässige, winkelig zueinander stehende, faltenartige Flächenabschnitte (36) aufweist **gekennzeichnet durch** einem sich im bestimmungsgemäß eingebauten Zustand oberhalb an den ersten Siebabschnitt (32) anschließenden zweiten Siebabschnitt (34), der mit einem Neigungswinkel (α) zum ersten Siebabschnitt (32) in Abströmrichtung geneigt ist und **durch** zwischen den faltenartigen Flächenabschnitten (36) gebildete Zwickelräume (38), die abwechselnd auf einer Anströmseite und einer Abströmseite der Siebanordnung liegen.

2. Rauchgaskanal (20) nach Anspruch 1, wobei der Neigungswinkel (α) ≤ 40° ist.

3. Rauchgaskanal (20) nach Anspruch 1, wobei der Neigungswinkel (α) ≤ 30° ist.

4. Rauchgaskanal (20) nach einem der vorhergehenden Ansprüche, wobei die Siebanordnung zumindest ein Spaltsieb aufweist.

5. Rauchgaskanal (20) nach Anspruch 1, wobei sich der zweite Siebabschnitt (34) im Wesentlichen bündig an die Oberkanten der faltenartigen Flächenabschnitte (36) anschließt.

6. Rauchgaskanal (20) nach Anspruch 1, wobei der zweite Siebabschnitt (34) zuströmseitig über die faltenartigen Flächenabschnitte (36) vorspringt.

7. Rauchgaskanal (20) nach Anspruch 1, wobei die faltenartigen Flächenabschnitte (36) an ihren anströmseitigen hinteren Umlenkstellen über geschlossene Rinnen (40) miteinander verbunden sind.

8. Rauchgaskanal (20) nach Anspruch 1, wobei der erste und/oder der zweite Siebabschnitt (32, 34) aus perforierten Blechen bestehen.

9. Rauchgaskanal (20) nach einem der vorhergehenden Ansprüche, dessen Grobascheabscheider (22) eine Rüttel- oder Klopfeinrichtung aufweist.

10. Rauchgaskanal (20) nach Anspruch 9, wobei die Siebanordnung im bestimmungsgemäß eingebauten Zustand beweglich gehalten ist.

## Claims

1. A flue gas channel (20) with a coarse ash separator (22) fitted therein or attached to it, comprising a sieve arrangement with a first sieve segment (32) which is arranged, in its intended built-in state, basically perpendicular to the direction of extension of the downstream flue gas channel (20), wherein the first sieve segment (32) comprises several surface sections (36) being gas permeable, crease-like and angled to each other, **characterized by** a second sieve segment (34) which is arranged above the said first sieve segment (32) in the intended built-in position, which is inclined towards the first sieve segment (32) by an angle α In the flow-off direction and by spaces (38) formed between the crease-like surface sections (36) which are arranged on a downstream and anon an upstream side of said sieve arrangement in an alternating manner.

2. Flue gas channel (20) according to claim 1, wherein the angle of inclination α is ≤40°.

3. Flue gas channel (20) according to claim 1, wherein the angle of inclination α is ≤30°.

4. Flue gas channel (20) according any preceding claim wherein the sieve arrangement comprises at least one slit sieve.

5. Flue gas channel (20) according to claim 1, wherein the second sieve segment (34) follows the upper edges of the crease-like surface sections (36) mostly in a flush manner.

6. Flue gas channel (20) according to claim 1, wherein the second sieve segment (34) protrudes the crease-like surface sections (36) in an upstream direction.

7. Flue gas channel (20) according to claim 1, wherein the crease-like surface sections (36) are linked with each other at their rear upstream deflection areas via closed chutes (40).

8. Flue gas channel (20) according to claim 1, wherein the first and/or the second sieve segment (32, 34) are made of perforated metal sheets.

9. Flue gas channel (20) according to any preceding claim, the coarse grain separator (22) of which comprises a shaking or knocking unit.

10. Flue gas channel (20) according to claim 9, wherein the sieve arrangement is mounted in a moveable manner in its intended use position.

## Revendications

1. Conduit de gaz de fumée (20) avec un séparateur de cendres grossier (22) incorporé dans celui-ci ou disposé sur celui-ci, qui comprend un système de filtrage avec une première section de filtrage (32) qui s'étend, à l'état conformément monté, pour l'essentiel transversalement au sens d'extension du conduit de gaz de fumée (20) du côté évacuation, la première section de filtrage (32) présentant plusieurs sections de surface (36) plissées, perméables aux gaz, situées de façon angulaire l'une par rapport à l'autre, **caractérisé en ce qu'**une deuxième section de filtrage (34) se raccorde à l'état conformément monté au-dessus à la première section de filtrage (32) qui est inclinée avec un angle d'inclinaison (α) par rapport à la première section de filtrage (32) dans le sens d'évacuation, et par des espaces en gousset (38) formés entre les sections de surface (36) plissées qui se situent alternativement sur un côté d'arrivée et un côté d'évacuation du système de filtrage.

2. Conduit de gaz de fumée (20) selon la revendication 1, pour lequel l'angle d'inclinaison (α) est ≤ 40°.

3. Conduit de gaz de fumée (20) selon la revendication 1, pour lequel l'angle d'inclinaison (α) est ≤ 30°.

4. Conduit de gaz de fumée (20) selon une quelconque des revendications précédentes pour lequel le système de filtrage présente au moins un filtre à fentes.

5. Conduit de gaz de fumée (20) selon la revendication 1, pour lequel la deuxième section de filtre (34) se raccorde pour l'essentiel par affleurement aux bords supérieur des sections de surface (36) plissées.

6. Conduit de gaz de fumée (20) selon la revendication 1, pour lequel la deuxième section de filtre (34) fait saillie du côté de l'écoulement affluant au-dessus des sections de surface (36) plissées.

7. Conduit de gaz de fumée (20) selon la revendication 1, pour lequel les sections de surface (36) plissées sont reliées entre elles à leurs points de déviation arrière du côté de l'écoulement affluant par des conduites fermées (40).

8. Conduit de gaz de fumée (20) selon la revendication 1, pour lequel la première et/ou deuxième section de filtrage (32, 34) sont en tôles perforées.

9. Conduit de gaz de fumée (20) selon une quelconque des revendications précédentes dont le séparateur de cendres grossier (22) présente un dispositif à vibrations ou pulsations.

10. Conduit de gaz de fumée (20) selon la revendication 9, pour lequel le système de filtrage est maintenu mobile à l'état conformément monté.
